(19) Europäisches Patentamt
European Patent Office
Office européen des brevets

(11) EP 4 734 040 A1

(12) EUROPEAN PATENT APPLICATION
published in accordance with Art. 153(4) EPC

(43) Date of publication:
29.04.2026 Bulletin 2026/18

(21) Application number: 24825112.6

(22) Date of filing: 27.05.2024

(51) International Patent Classification (IPC):
G06T 3/00 (2024.01)

(52) Cooperative Patent Classification (CPC):
G06T 3/00; G06T 3/08; G06T 3/12; G06T 15/20;
G06T 19/00

(86) International application number:
PCT/CN2024/095519

(87) International publication number:
WO 2024/260216 (26.12.2024 Gazette 2024/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.06.2023 CN 202310736743

(71) Applicant: Douyin Vision Co., Ltd.
Beijing 100041 (CN)

(72) Inventors:
• GUI, Yongqiang
Beijing 100028 (CN)
• SHI, Shu
Los Angeles, CA 90066 (US)
• SUO, Yanyan
Beijing 100028 (CN)

(74) Representative: Isarpatent
Patent- und Rechtsanwälte PartG mbB
Friedrichstraße 31
80801 München (DE)

(54) **IMAGE PROCESSING METHOD AND APPARATUS, AND ELECTRONIC DEVICE**

(57) The present disclosure provides a method, an apparatus and an electronic device for image processing. The method includes: determining a first image, the first image being obtained by projecting a panoramic image onto a spherical surface, the first image including a second image, and the second image including an image covered by a field of view of a user in the first image; determining a first angle of a horizontal span of the second image relative to a sphere center corresponding to the first image and a second angle of a vertical span of the second image relative to the sphere center; performing equal-angle division on the second image domain based on the first angle and the second angle to obtain M*N sub-images, M and N being positive integers determined based on a preset resolution; and performing pixel sampling on the M*N sub-images to obtain a sampled image.

EP 4 734 040 A1

DETERMINE A FIRST IMAGE, THE FIRST IMAGE INCLUDING A SECOND IMAGE — S201

DETERMINE A FIRST ANGLE OF HORIZONTAL SPAN OF THE SECOND IMAGE RELATIVE TO A SPHERE CENTER CORRESPONDING TO THE FIRST IMAGE AND A SECOND ANGLE OF VERTICAL SPAN OF THE SECOND IMAGE RELATIVE TO THE SPHERE CENTER — S202

PERFORM EQUAL-ANGLE DIVISION ON THE SECOND IMAGE BASED ON THE FIRST ANGLE AND THE SECOND ANGLE TO OBTAIN M*N SUB-IMAGES — S203

PERFORM PIXEL SAMPLING ON THE M*N SUB-IMAGES TO OBTAIN A SAMPLED IMAGE — S204

FIG. 2

**Description**

The present application claims priority to Chinese Patent Application No. 202310736743.4, filed on June 20, 2023, and entitled "METHOD, APPARATUS AND ELECTRONIC DEVICE FOR IMAGE PROCESSING", which is hereby incorporated by reference in its entirety.

**FIELD**

Embodiments of the present disclosure relate to the technical field of image processing, and in particular to a method, an apparatus and an electronic device for image processing.

**BACKGROUND**

In the field of virtual reality, a server may determine an image viewed by a user in a panoramic image based on a perspective range of the user, and send the image viewed by the user to a virtual reality device.

At present, the server may convert a spherical panoramic image into a plane panoramic image based on equirectangular projection, determine an image patch (the plane panoramic image will be divided into multiple image patches) viewed by the user in the plane panoramic image, and send the image patch viewed by the user to the virtual reality device. However, the uniformity of pixel density of the plane panoramic image obtained by the equirectangular projection is poor, and the uniformity of sampling of the server in the panoramic image based on the perspective range is poor, resulting in waste of network resources.

**SUMMARY**

The present disclosure provides a method, an apparatus and an electronic device for image processing, which are used to solve one or more technical problems in the prior art.

In a first aspect, the present disclosure provides a method for image processing, the method includes: determining a first image, where the first image is an image obtained by projecting a panoramic image onto a spherical surface, the first image includes a second image, and the second image includes an image covered by a field of view of a user in the first image; determining a first angle of a horizontal span of the second image relative to a sphere center corresponding to the first image and a second angle of a vertical span of the second image relative to the sphere center; performing equal-angle division on the second image domain based on the first angle and the second angle, to obtain M*N sub-images, where the M and the N are positive integers determined based on a preset resolution; and performing pixel sampling on the M*N sub-images, to obtain a sampled image.

In a second aspect, the present disclosure provides an apparatus for image processing, the apparatus for image processing including a first determination module, a second determination module, a division module and a sampling module. The first determination module is configured to determine a first image, where the first image is an image obtained by projecting a panoramic image onto a spherical surface, the first image includes a second image, and the second image includes an image covered by a field of view of a user in the first image. The second determination module is configured to determine a first angle of a horizontal span of the second image relative to a sphere center corresponding to the first image and a second angle of a vertical span of the second image relative to the sphere center. The division module is configured to perform equal-angle division on the second image domain based on the first angle and the second angle, to obtain M*N sub-images, where the M and the N are positive integers determined based on a preset resolution. The sampling module is configured to perform pixel sampling on the M*N sub-images, to obtain a sampled image.

In a third aspect, an embodiment of the present disclosure provides an electronic device including: a processor and a memory, where the memory stores computer-executable instructions, and the processor executes the computer-executable instructions stored in the memory, causing the at least one processor to perform the method for image processing according to the above first aspect and various possible implementations of the first aspect.

In a fourth aspect, an embodiment of the present disclosure provides a computer-readable storage medium storing computer-executable instructions, and when a processor executes the computer-executable instructions, the method for image processing according to the above first aspect and various possible implementations of the first aspect is implemented.

**BRIEF DESCRIPTION OF DRAWINGS**

In order to illustrate the technical solutions in embodiments of the present disclosure or in the prior art more clearly, the following will briefly introduce the drawings that need to be used in the description of the embodiments or the prior art. Obviously, the drawings in the following description are some embodiments of the present disclosure, and for those of ordinary skill in the art, other drawings can also be obtained from these drawings without creative effort.

FIG. 1 is a schematic diagram of an application scenario according to an embodiment of the present disclosure;

FIG. 2 is a schematic flowchart of a method for image processing according to an embodiment of the present disclosure;

FIG. 3 is a schematic diagram of a first image according to an embodiment of the present disclosure;

FIG. 4 is a schematic diagram of a first angle according to an embodiment of the present disclosure;

FIG. 5 is a schematic diagram of a second angle according to an embodiment of the present disclosure;

FIG. 6 is a schematic diagram of a first sub-angle according to an embodiment of the present disclosure;

FIG. 7 is a schematic diagram of determining M*N sub-images according to an embodiment of the present disclosure;

FIG. 8 is a schematic diagram of determining a sampled image according to an embodiment of the present disclosure;

FIG. 9 is a schematic diagram of a method for determining a first image according to an embodiment of the present disclosure;

FIG. 10 is a schematic diagram of a process of determining a second image according to an embodiment of the present disclosure;

FIG. 11 is a schematic diagram of a rotated image according to an embodiment of the present disclosure;

FIG. 12 is a schematic diagram of determining an image to be transmitted according to an embodiment of the present disclosure;

FIG. 13 is a schematic diagram of a process of a method for image processing according to an embodiment of the present disclosure;

FIG. 14 is a schematic structural diagram of an apparatus for image processing according to an embodiment of the present disclosure; and

FIG. 15 is a schematic structural diagram of an electronic device according to an embodiment of the present disclosure.

## DETAILED DESCRIPTION

Example embodiments will be described in detail here, and examples thereof are shown in the drawings. The following description relates to the drawings, and unless otherwise indicated, the same numbers in different drawings represent the same or similar elements. The implementations described in the following example embodiments do not represent all implementations consistent with the present disclosure. On the contrary, they are merely examples of apparatuses and methods consistent with some aspects of the present disclosure as detailed in the appended claims.

For ease of understanding, concepts involved in embodiments of the present disclosure will be described below.

Electronic device: it is a device with wireless transceiving function. The electronic device may be deployed on land, including indoors or outdoors, handheld, wearable or vehicle-mounted; and may also be deployed on water (such as ships, etc.). The electronic device may be a mobile phone, a tablet computer, a computer with wireless transceiving function, a virtual reality (VR) electronic device, an augmented reality (AR) electronic device, a wireless terminal in industrial control, a vehicle-mounted electronic device, a wireless terminal in self driving, a wireless electronic device in remote medical, a wireless electronic device in smart grid, a wireless electronic device in transportation safety, a wireless electronic device in smart city, a wireless electronic device in smart home, a wearable electronic device, etc. The electronic device involved in the embodiments of the present disclosure may also be referred to as a terminal, a user equipment (UE), an access electronic device, a vehicle-mounted terminal, an industrial control terminal, a UE unit, a UE station, a mobile station, a mobile station, a remote station, a remote electronic device, a mobile device, a UE electronic device, a wireless communication device, a UE agent, or a UE apparatus. The electronic device may also be fixed or mobile.

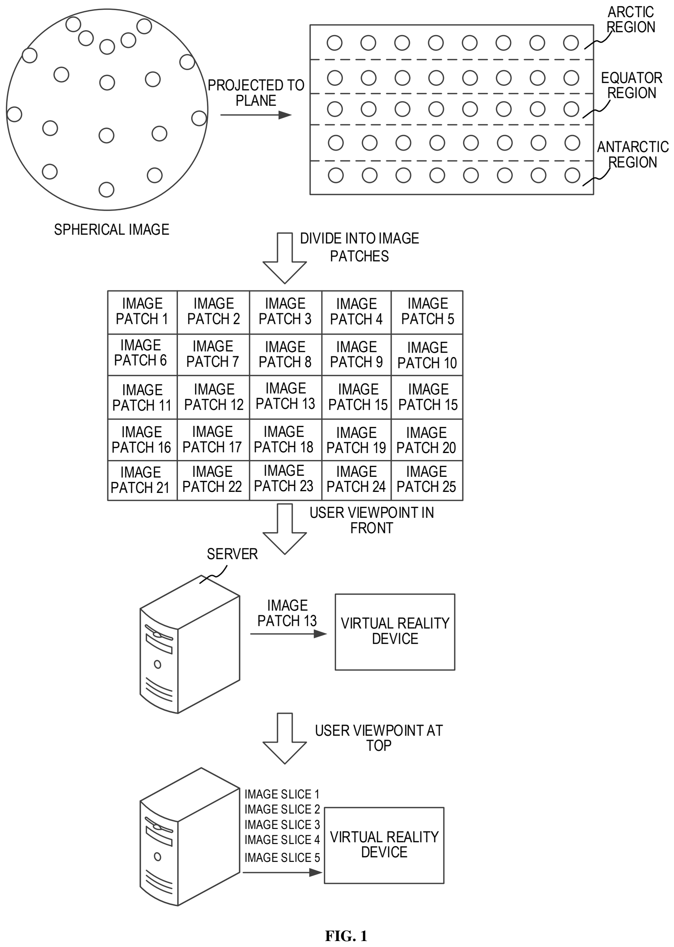

An application scenario of the embodiments of the present disclosure will be described below with reference to FIG. 1.

FIG. 1 is a schematic diagram of an application scenario according to an embodiment of the present disclosure. Referring to FIG. 1, a spherical image, a server and a virtual reality device are included. The spherical image includes multiple sampling points (circles in the spherical image are sampling points), and the server may project the spherical image onto a plane to obtain the plane image. The plane image may include multiple sampling points, a first row of sampling points of the plane image is located in the North Pole region, a third row of sampling points of the plane image is located in the equator region, and a fifth row of sampling points of the plane image is located in the South Pole region.

Referring to FIG. 1, the server may divide the plane image into 25 image patches, and if the user's viewpoint is in the front, the server may send the image patch 13 to the virtual reality device; if the user's viewpoint is at the top, the server may send the image patch 1, the image patch 2, the image patch 3, the image patch 4 and the image patch 5 to the virtual reality device. In this way, the server may send image patches within the field of view range to the virtual reality device based on the field of view of the user, thereby reducing the amount of data transmitted.

It should be noted that FIG. 1 is only an example illustration of the application scenario of the embodiments of the present disclosure, and is not a limitation to the application scenario of the embodiments of the present disclosure.

In the related art, the server may determine an image viewed by the user in images of a panoramic video based on a field of view of the user, and send the image viewed by the user to the virtual reality device. For example, as shown in FIG. 1, since the server may not encode the curved image, the server may project the curved image to the plane. If the field of view viewed by the user includes the image patch 13 in the plane image, the server may send the image patch 13 to the virtual reality device. At present, the server may convert a curved panoramic image into a plane panoramic image based on equirectangular projection, and the server may determine an image patch in the plane panoramic image viewed by the user, and send the image patch to the virtual reality device. However, the uniformity of pixel density of the plane panoramic image obtained by the equirectangular projection is poo. For example, as shown in FIG. 1, the pixel density of the equator part in the plane panoramic image is relatively large, and the pixel density of the two poles part is relatively small. If the field of view of the user is in the equator part, the field of view may cover fewer image patches. However, if the field of view of the user is in the two poles regions, the field of view may cover all the image patches in the two poles regions (that is, for the same size of the field of view, the number of image patches covered by the field of view in the two poles is greater than the number of image patches covered by the field of view in the equator). In this way, when the server samples the image within the field of view range, the uniformity of sampling is poor, and the server needs to transmit more image patches, resulting in waste of network resources.

In order to solve the technical problem in the related art, an embodiment of the present disclosure provides a method for image processing, an electronic device may acquire a panoramic image corresponding to the first image and a viewpoint of a user, and rotate the panoramic image based on the viewpoint of the user, to obtain a rotated image, where the viewpoint of the user is in the center of the rotated image. The electronic device may project the rotated image onto a spherical surface based on a perspective projection, to obtain the first image. The electronic device may determine a first angle of a horizontal span of a second image in the first image relative to a sphere center corresponding to the first image and a second angle of a vertical span of the second image relative to the sphere center, and perform equal-angle division on the second image based on the first angle and the second angle, to obtain M*N sub-images. The M and the N are positive integers determined based on a preset resolution, and pixel sampling is performed in the M*N sub-images, to obtain a sampled image. In the above method, since the electronic device may rotate the panoramic video frame based on the viewpoint, the center of the second image in the first image may be located in an equator part of the first image, and the pixel density of the second image may be relatively high. Moreover, since the multiple sub-images are obtained based on equal-angle division of the second image, the electronic device may uniformly sample pixels in the second image to obtain the sampled image, thereby improving the accuracy of the sampled image and saving network resources.

The technical solutions of the present disclosure and how the technical solutions of the present disclosure solve the above technical problems will be described in detail below with specific embodiments. The following specific embodiments may be combined with each other, and the same or similar concepts or processes may not be repeated in some embodiments. The embodiments of the present disclosure will be described below with reference to the drawings.

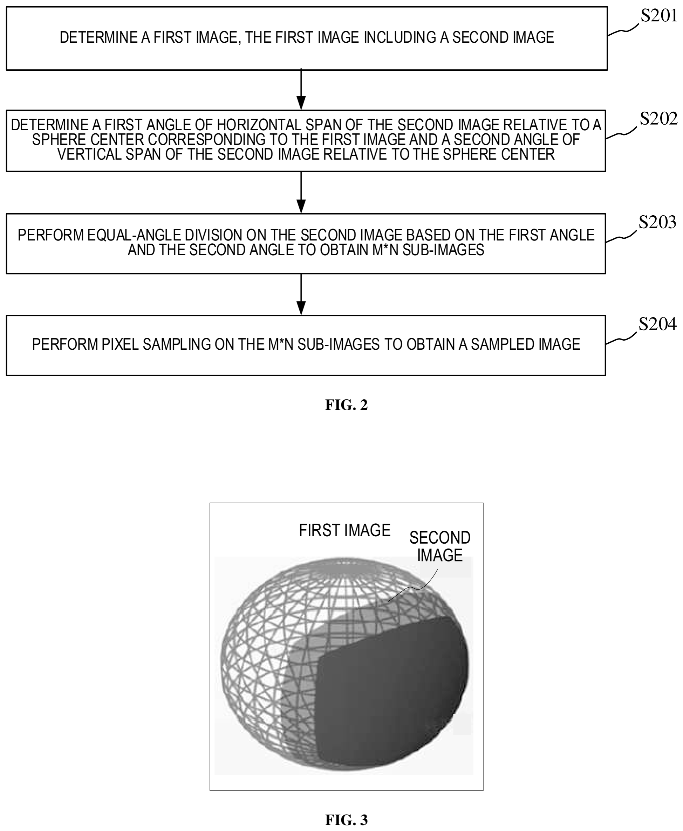

FIG. 2 is a schematic flowchart of a method for image processing according to an embodiment of the present disclosure. Referring to FIG. 2, the method may include the followings.

At block S201, a first image is determined, where the first image includes a second image.

The execution body in an embodiment of the present disclosure may be an electronic device, or may be an apparatus for image processing arranged in the electronic device. The apparatus for image processing may be implemented based on software, and the apparatus for image processing may also be implemented based on a combination of software and hardware, which is not limited in the embodiments of the present disclosure. Optionally, the electronic device may be any device with on-device computing capabilities, for example, the electronic device may be a server, a computer, or other devices, which is not limited in the embodiments of the present disclosure.

In some embodiments, the first image may be an image obtained by projecting the panoramic image onto the spherical surface. For example, the panoramic image may be a plane image. The electronic device may project the panoramic image onto the spherical surface of the sphere, thereby obtaining the curved first image. If the viewing angle of the user is located at the center of the sphere, the curved first image may present a three-dimensional display effect for the user.

Optionally, the panoramic image may be a plane image obtained based on equirectangular projection (ERP). For example, the ERP projection may project the longitudes of the spherical surface into vertical lines with equal spacing, and project the latitudes of the spherical surface into horizontal lines with equal spacing. The electronic device may render a spherical image with a three-dimensional effect, and may convert the spherical image into a plane panoramic image based on ERP projection.

Optionally, the panoramic image may be a plane image obtained based on cube map projection (CMP). For example, the CMP projection may embed the spherical surface into a cube, and project the spherical surface onto six surfaces of the cube based on perspective projection. The electronic device may render the spherical image with a three-dimensional effect, project the spherical image onto the six surfaces of the cube based on the CMP projection, and expand the six surfaces of the cube to obtain the plane panoramic image.

Optionally, the panoramic image may also be an image captured by a panoramic camera device. For example, a fisheye camera may capture a panoramic image, which is not limited in the embodiments of the present disclosure.

Optionally, the electronic device may receive a panoramic image sent by another device, and the electronic device may also acquire the panoramic image in a database, which is not limited in the embodiments of the present disclosure.

It should be noted that in the actual application process, the electronic device may generate a panoramic video. The video frame in the panoramic video is a panoramic image, and the electronic device may send each panoramic video frame in the panoramic video to the virtual reality device. In this way, the virtual reality device may present the effect of the three-dimensional video for the user.

In some embodiments, the first image may be a curved image. For example, the first image may be an image obtained by projecting a plane image onto the surface of the sphere. Therefore, the first image may be the curved image. The first image may include the second image, and the second image may include an image covered by the field of view of the user in the first image. For example, the field of view (FOV) of the user may cover part of the image in the first image, and the second image may include that part of the image. In this way, when the viewing angle of the user moves slightly, the user may also see a valid picture, thereby improving the user experience.

It should be noted that the second image may be an image to be transmitted by the electronic device, and the electronic device may determine the second image in the first image, and project the second image onto a plane to obtain a plane image. The electronic device may encode the plane image and send the encoded plane image to the virtual reality device.

Optionally, the center of the second image may be the viewpoint of the field of view of the user, and the center of the second image may be located in a region within a preset range of the equator of the first image. For example, the region within the preset range of the equator of the first image may be a region within a range of 30 degrees above and below the equator, and the region within the preset range of the equator of the first image may also be a region of 50 degrees above and below the equator, which is not limited in the embodiments of the present disclosure.

For example, the center of the second image may be located in the region within the preset range of the equator of the first image, and the center of the second image may also be located on the equator of the first image. In this way, since the center of the second image may be the viewpoint of the user, and the pixel density in the region within the preset range of the equator of the first image may be relatively high. Therefore, if the center of the second image is in the region within the preset range of the equator of the first image, the pixel density in the second image may be relatively high, thereby improving the uniformity of sampling.

Optionally, after acquiring the panoramic image, the electronic device may rotate the panoramic image, so that the viewpoint of the FOV of the user may be located in the center of the rotated image, and project the rotated image onto the spherical surface, thereby obtaining the first image. In this way, the viewpoint of the user may be located in the region within the preset range of the equator, that is, the center point of the second image is located in the region within the preset range of the equator, and the pixel density of the second image may be relatively high, and the pixel uniformity may be relatively high. Therefore, the electronic device may accurately obtain the image to be transmitted, thereby saving network resources.

The first image will be described below with reference to FIG. 3.

FIG. 3 is a schematic diagram of a first image according to an embodiment of the present disclosure. Referring to FIG. 3, a first image is included. The first image is a curved image on the surface of the sphere, and the first image may include a second image (the image in the black area on the surface of the first image and the image in the gray area may be the second image in the first image, and the image in the black area may be an image covered by the field of view of the user in the first image). The center of the second image may be located on the equator of the sphere corresponding to the first image. In this way, the second image may face the equatorial plane of the sphere, thereby improving the pixel density of the second image and the accuracy of sampling.

At block S202, a first angle of a horizontal span of the second image relative to a sphere center corresponding to the first image and a second angle of a vertical span of the second image relative to the sphere center are determined.

In some embodiments, the first angle may be an angle of the horizontal span of the second image relative to the sphere center corresponding to the first image. For example, if the second image is horizontally spanned by 100 degrees relative to the sphere center (the sphere center of the sphere corresponding to the first image), the first angle may be 100 degrees. If the second image is horizontally spanned by 200 degrees relative to the sphere center, the first angle may be 200 degrees.

In some embodiments, the second angle may be an angle of the vertical span of the second image relative to the sphere center corresponding to the first image. For example, if the second image is vertically spanned by 50 degrees relative to the sphere center corresponding to the first image, the second angle may be 50 degrees. If the second image is vertically spanned by 80 degrees relative to the sphere center corresponding to the first image, the second angle may be 80.

Optionally, the electronic device may determine the first angle of the horizontal span of the second image relative to the sphere center corresponding to the first image and the second angle of the vertical span of the second image relative to the sphere center based on the following feasible implementations. The electronic device may determine an angle between the connection lines connecting midpoints of two arcs in a vertical direction of the second image and the sphere center as the first angle of the horizontal span, and determine an angle between the connection lines connecting midpoints of two arcs in a horizontal direction of the second image and the sphere center as the second angle of the vertical span.

Optionally, the second image may be determined based on four arcs, the two arcs in the vertical direction may be a left arc and a right arc of the second image, and the two arcs in the horizontal direction may be an upper arc and a lower arc of the second image.

Optionally, the electronic device may determine the angle between the connection lines connecting the midpoint of the left arc, the midpoint of the right arc and the sphere center as the first angle of the horizontal span. For example, since the first image is the curved image, the angle between the connection lines connecting the midpoint of the left arc, the midpoint of the right arc and the sphere center may be a maximum angle of the second image in the horizontal direction, and the electronic device may determine this angle as the first angle.

Optionally, the electronic device may determine an angle between connection lines connecting the midpoint of the upper arc, the midpoint of the lower arc and the sphere center as the second angle of the vertical span. For example, since the first image is the curved image, the angle between the connection lines connecting the midpoint of the upper arc, the midpoint of the lower arc and the sphere center may be a maximum angle of the second image in the vertical direction, and the electronic device may determine this angle as the second angle. In this way, the electronic device may accurately determine the angle of the second image relative to the sphere center, and then may accurately perform equal-angle division on the second image to improve the accuracy and uniformity of sampling.

Optionally, since the first image is the curved image, the electronic device may also arbitrarily select a group of two opposing points (such as a point 10 pixels away from the upper left vertex on the left arc and a point 10 pixels away from the upper right vertex on the right arc) on two vertical opposite arcs of the second image, and determine an angle between a connection lines connecting the group of two opposing points and the sphere center as the first angle.

Optionally, since the first image is the curved image, the electronic device may also arbitrarily select a group of two opposing points (such as a point 10 pixels away from the upper left vertex on the upper arc and a point 10 pixels away from the lower left vertex on the lower arc) on two horizontal opposite arcs of the second image, and determine an angle between connection lines connecting the group of two opposing points and the sphere center as the second angle.

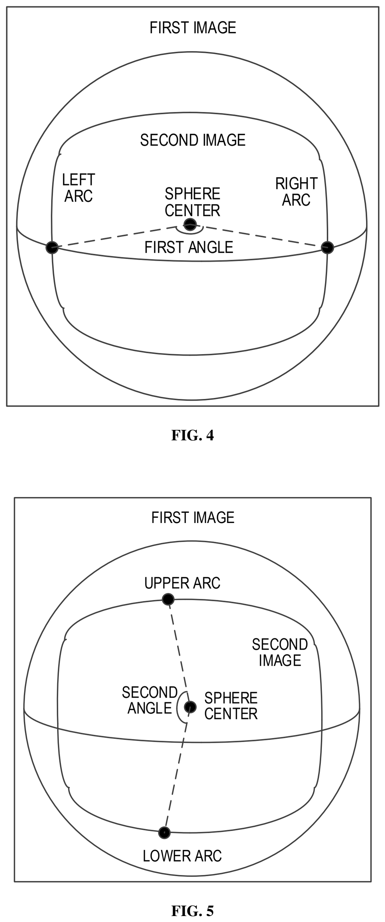

The first angle will be described below with reference to FIG. 4.

FIG. 4 is a schematic diagram of a first angle according to an embodiment of the present disclosure. Referring to FIG. 4, a first image is included. The first image may include a second image. The center of the second image is located on the equator of the first image. The second image may include a left arc and a right arc. The electronic device (not shown in FIG. 4) may determine an angle between connection lines connecting the midpoint of the left arc, the midpoint of the right arc and the sphere center as the first angle.

The second angle will be described below with reference to FIG. 5.

FIG. 5 is a schematic diagram of a second angle according to an embodiment of the present disclosure. Referring to FIG. 5, a first image is included. The first image may include a second image. The center of the second image is located on the equator of the first image. The second image may include an upper arc and a lower arc. The electronic device (not shown in FIG. 5) may determine an angle between connection lines connecting the midpoint of the upper arc, the midpoint of the lower arc and the sphere center as the second angle.

At block S203, equal-angle division is performed on the second image based on the first angle and the second angle, to obtain M*N sub-images.

Where M and the N may be positive integers determined based on the preset resolution. For example, if the preset resolution is 800*400, the M is 800, and the N is 400I If the preset resolution is 800* 1600, the M is 800, and the N is 1600.

Optionally, the preset resolution may be any configured resolution, which is not limited in the embodiments of the present disclosure.

In some embodiments, the electronic device may obtain the M*N sub-images based on the following feasible implementations. The electronic device may evenly divide the first angle into M first bisected angles, evenly divide the second angle into N second bisected angles, and perform equal-angle division on the second image based on the M first bisected angles and the N second bisected angles, to obtain the M*N sub-images.

Optionally, an angle of the first sub-angle may be a ratio of the first angle to the M. For example, if the first angle is 100 degrees and the M is 50, the electronic device may evenly divide the first angle into 50 first bisected angles. For example, if the first angle is 100 degrees and the M is 50, the electronic device may determine that each first sub-angle is 2 degrees, and the sum of the 50 first bisected angles may be the first angle.

Optionally, an angle of the second sub-angle may be a ratio of the second angle to the N. For example, if the second angle is 100 degrees and the N is 200, the electronic device may evenly divide the second angle into 200 second bisected angles. For example, if the second angle is 100 degrees and the N is 200, the electronic device may determine that each second sub-angle is 0.5 degrees, and the sum of the 200 second bisected angles may be the second angle.

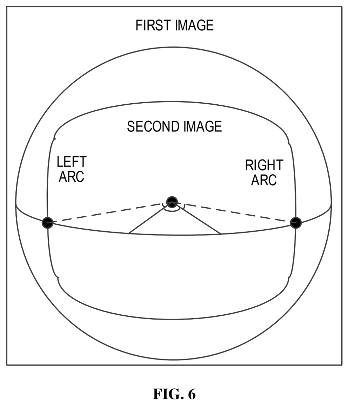

The first sub-angle will be described below with reference to FIG. 6.

FIG. 6 is a schematic diagram of a first sub-angle according to an embodiment of the present disclosure. For ease of understanding, in the embodiment shown in FIG. 6, the M may be 3, and referring to FIG. 6, a first image is included. The first image may include a second image. The center of the second image is located on the equator of the first image. The second image may include a left arc and a right arc. The first angle may be an angle between connection lines connecting the midpoint of the left arc, the midpoint of the right arc and the sphere center. The first angle may be evenly divided into 3 parts to obtain 3 first bisected angles. In this way, the electronic device may evenly divide the first angle into multiple first bisected angles, thereby improving the uniformity of pixels in the sub-image and the accuracy of the second image.

It should be noted that the second sub-angle is similar to the first sub-angle in the embodiment shown in FIG. 6, and details will not be repeated in the embodiments of the present disclosure.

In some embodiments, the electronic device performs equal-angle division on the second image based on the M first bisected angles and the N second bisected angles to obtain the M*N sub-images Specifically, the electronic device may determine M+1 arcs in the vertical direction in the second image associated with the M first bisected angles, determine N+1 arcs in the horizontal direction in the second image associated with the N second bisected angles, and divide the second image into the M*N sub-images based on the M+1 arcs in the vertical direction and the N+1 arcs in the horizontal direction.

Optionally, the arc in the vertical direction may be an arc passing through a side of the first sub-angle and a focus point of the first image in the vertical direction. For example, the arc in the vertical direction may be perpendicular to the equator of the first image. For example, for any first sub-angle (the first sub-angle does not intersect with the left arc and the right arc), there may be a focus point 1 and a focus point 2 between the first sub-angle and the first image, and the electronic device may determine that one arc in the vertical direction is an arc passing through the focus point 1 and perpendicular to the equator, and the electronic device may determine that another arc in the vertical direction is an arc passing through the focus point 2 and perpendicular to the equator.

Optionally, the arc in the horizontal direction may be an arc passing through a side of the second sub-angle and a focus point of the first image in the horizontal direction. For example, the arc in the horizontal direction may be parallel to the equator of the first image. For example, for any second sub-angle (the second sub-angle does not intersect with the upper arc and the lower arc), there may be a focus point 1 and a focus point 2 between the second sub-angle and the first image, and the electronic device may determine that one arc in the horizontal direction is an arc passing through the focus point 1 and parallel to the equator, and the electronic device may determine that another arc in the horizontal direction is an arc passing through the focus point 2 and parallel to the equator.

It should be noted that the M+1 arcs in the vertical direction may include the left arc and the right arc of the second image, and the N+1 arcs in the horizontal direction may include the upper arc and the lower arc of the second image.

It should be noted that in the vertical direction, the multiple groups of adjacent arcs have the same horizontally spanned angle relative to the sphere center. For example, the arc 1 in the vertical direction is adjacent to the arc 2 in the vertical direction, and the arc 2 in the vertical direction is adjacent to the arc 3 in the vertical direction. The angle between the connection lines connecting the midpoint of the arc 1 and the midpoint of the arc 2 and the sphere center is angle A, and the angle between the connection lines connecting the midpoint of the arc 2 and the midpoint of the arc 3 and the sphere center is angle B, where the angle A may be the same as the angle B, that is, equal-angle division is performed on the second image in the vertical direction.

It should be noted that in the horizontal direction, the multiple groups of adjacent arcs have the same vertically spanned angle relative to the sphere center. For example, the arc 1 in the horizontal direction is adjacent to the arc 2 in the horizontal direction, and the arc 2 in the horizontal direction is adjacent to the arc 3 in the horizontal direction. The angle between the connection lines connecting the midpoint of the arc 1 and the midpoint of the arc 2 and the sphere center is angle A, and the angle between the connection lines connecting the midpoint of the arc 2 and the midpoint of the arc 3 and the sphere center is angle B. The angle A may be the same as the angle B, that is, equal-angle division is performed on the second image in the horizontal direction.

Optionally, the electronic device may divide the second image into M*N grids based on the M+1 arcs in the vertical direction and the N+1 arcs in the horizontal direction, where the image in each grid may be a sub-image. For example, the electronic device may divide the second image into 2 regions in the vertical direction based on 3 arcs in the vertical direction (including the left arc and the right arc), and the electronic device may divide the second image into 2 regions in the horizontal direction based on 3 arcs in the horizontal direction (including the upper arc and the lower arc). That is, the electronic device may obtain 4 grids based on the 3 arcs in the vertical direction and the 3 arcs in the horizontal direction, and the image in each grid may be a sub-image.

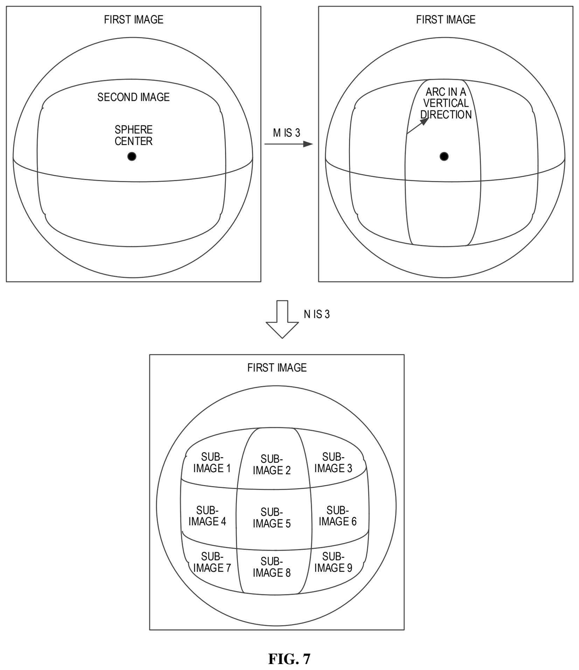

The process of determining the M*N sub-images will be described below with reference to FIG. 7.

FIG. 7 is a schematic diagram of determining M*N sub-images according to an embodiment of the present disclosure. For ease of understanding, in the embodiment shown in FIG. 7, the M is 3, and the N is 3, and referring to FIG. 7, a first image is included. The first image may include a sphere center and a second image, where the center of the second image is located on the equator. If M is 3, the electronic device (not shown in FIG. 7) may determine 4 arcs in the vertical direction (including the left arc and the right arc of the second image) in the second image, and then divide the second image into 3 regions at equal angles in the vertical direction.

Referring to FIG. 7, if N is 3, the electronic device may determine 4 arcs in the horizontal direction (including the upper arc and the lower arc of the second image) in the second image, and then divide the second image into 3 regions at equal angles in the horizontal direction (the equator line is not shown). The second image may be divided into the sub-image 1, the sub-image 2,..., the sub-image 9 at equal angles based on the 3 regions in the horizontal direction and the 3 regions in the vertical direction. In this way, since the center of the second image is located on the equator, and the 9 sub-images are obtained based on equal-angle division of the second image, the pixel density of the 9 sub-images may be relatively high, thereby improving the effect of sampling.

At block S204, pixel sampling is performed in the M*N sub-images, to obtain a sampled image.

In some embodiments, the sampled image may be an image obtained by projecting the second image in the first image onto a plane. For example, the second image may be an image to be transmitted, and the electronic device may project the second image onto the plane based on equal-angle projection, to obtain the sampled image. The equal-angle projection may be a projection mode of projecting pixels in multiple sub-images (the sub-images are obtained by performing equal-angle division on the second image) onto the plane.

Optionally, the resolution of the sampled image may be the same as the preset resolution. For example, if the preset resolution is 800*1600, 800*1600 sub-images may be acquired in the second image based on the preset resolution, and the electronic device may sample pixels in each sub-image to obtain the sampled image. Therefore, the resolution of the sampled image may be 800*1600.

Optionally, the electronic device may obtain the sampled image based on the following feasible implementations. For any target position in the sampled image, the electronic device may determine a sub-image corresponding to the target position in the second image, acquire one or more pixels in the sub-image, and perform fusion processing on the one or more pixels, to obtain a pixel of the target position in the sampled image.

Optionally, in the process of performing equal-angle projection on the second image, the electronic device may determine multiple sub-images in the second image corresponding to multiple positions in the sampled image, and then project pixels in the multiple sub-images to the multiple positions, to obtain the sampled image. For example, for the position (1, 1) in the sampled image, the electronic device may determine the sub-image corresponding to the position (1, 1) in the second image, and then determine the pixel in the sub-image as the pixel of the position (1, 1). By repeating the above steps, the sampled image may be obtained.

Optionally, the electronic device may determine the sub-image corresponding to the target position based on the following formula:

$$\begin{bmatrix} \phi \\ \frac{\varphi}{2} \\ 1 \end{bmatrix} = \begin{bmatrix} \frac{F_v}{M/2} & 0 & 0 \\ 0 & \frac{F_h}{N/2} & 0 \\ 0 & 0 & 1 \end{bmatrix} \begin{bmatrix} -1 & 0 & M/2 \\ 0 & -1 & N/2 \\ 0 & 0 & 1 \end{bmatrix} \cdot \begin{bmatrix} m \\ n \\ 1 \end{bmatrix}$$

where $F_v$ is the first angle; $F_h$ is the second angle, M is the number of pixels of the width of the sampled image; N is the number of pixels of the height of the sampled image; m is the coordinate of the target position in the width of the sampled image; n is the coordinate of the target position in the height of the sampled image; $\phi$ is the angle of the horizontal span of the sub-image (the position in the first angle), and $\varphi/2$ is the angle of the vertical span of the sub-image (the position in the second angle).

In this way, based on the above formula, the corresponding relationship between the multiple positions in the sampled image and the multiple sub-images in the second image may be determined, and then the sampled image may be accurately generated.

It should be noted that since $\varphi$ is the angle of the second image in the vertical direction, and the position of the angle may not be determined in the spherical coordinate system. Therefore, the angle may be converted into $\theta$ in the spherical coordinate system, thus the position of the sub-image may be accurately located in the second image based on $\phi$ and $\theta$.

In some embodiments, the electronic device may convert $\varphi$ into $\theta$ in the spherical coordinate system based on the following formula:

$$\theta = \frac{\pi}{2} - arcsin\left( sin\left(\frac{\varphi}{2}\right) sin\left( arctan\left( \frac{tan\left(\frac{\pi}{2} - \phi\right)}{\cos\left(\frac{\varphi}{2}\right)} \right) \right) \right)$$

The physical meaning of each parameter in the above formula may refer to the formula for determining the sub-image corresponding to the target position, which will not be repeated in the embodiments of the present disclosure.

It should be noted that after determining the second image and the preset resolution, the electronic device may achieve the effect of scaling the second image, such that the projection mode of the second image may have high adaptability. Moreover, the electronic device may flexibly determine the resolution of the second image based on the network condition, thereby improving the fluency of the user viewing the panoramic video.

Optionally, the electronic device may perform fusion processing on the one or more pixels to obtain the pixel of the target position in the sampled image. For example, the electronic device may perform averaging processing on pixel values of the one or more pixels to obtain the pixel of the target position. For example, if the sub-image corresponding to the target position includes a pixel 1, a pixel 2 and a pixel 3, the electronic device may average the RGB values of the pixel 1, the RGB values of the pixel 2 and the RGB values of the pixel 3 to obtain a new pixel, and determine the new pixel as the pixel of the target position.

Optionally, the electronic device may also perform fusion processing on the one or more pixels in the sub-image based on any other feasible implementations, which is not limited in the embodiments of the present disclosure.

Optionally, the electronic device may also determine any one pixel in the sub-image as the pixel of the target position. For example, if the sub-image corresponding to the target position includes a pixel 1, a pixel 2 and a pixel 3, the electronic device may determine the pixel 1 as the pixel of the target position, the electronic device may also determine the pixel 2 as the pixel of the target position, and the electronic device may also determine the pixel 3 as the pixel of the target position, which is not limited in the embodiments of the present disclosure. In this way, the electronic device may project the second image onto the plane to obtain the sampled image, and since the pixel density in the second image may be relatively high, the accuracy of the sampled image may be relatively high.

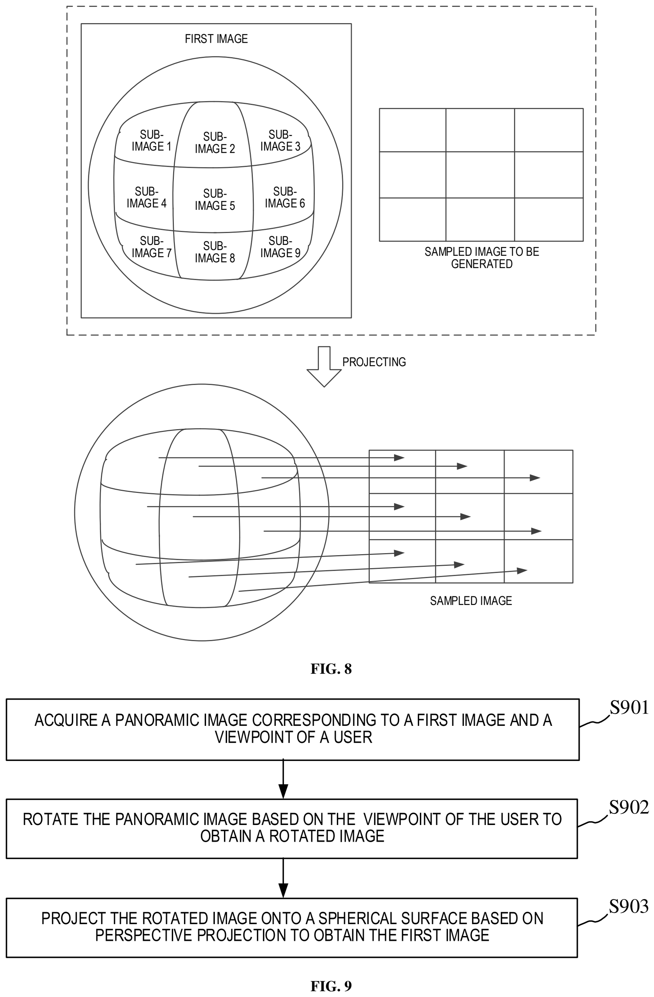

The process of determining the sampled image will be described below with reference to FIG. 8.

FIG. 8 is a schematic diagram of determining a sampled image according to an embodiment of the present disclosure. For ease of understanding, in the embodiment shown in FIG. 8, the sampled image may include 9 pixels, and referring to FIG. 8, a corresponding image is included. The first image may include the second image, the second image may include 9 sub-images, and the sampled image to be generated may include 9 positions filled with pixels. The electronic device (not shown in FIG. 8) may project the pixel in the sub-image 1 to the position 1, project the pixel in the sub-image 2 to the position 2,..., and project the pixel in the sub-image 9 to the position 9. In this way, the electronic device may project the second image to the plane image to obtain the sampled image. In the projection process, the uniformity of sampling may be good, and the pixel density in the second image may be relatively high, therefore, the accuracy of the sampled image may be relatively high.

An embodiment of the present disclosure provides a method for image processing, which includes: determining the first image, determining the first angle of the horizontal span of the second image relative to the sphere center corresponding to the first image and the second angle of the vertical span of the second image relative to the sphere center, dividing the first angle evenly into M first bisected angles, and dividing the second angle evenly into N second bisected angles; performing equal-angle division on the second image based on the M first bisected angles and the N second bisected angles, to obtain M*N sub-images; and performing pixel sampling on the M*N sub-images, to obtain a sampled image. Since the center of the second image is located on the equator of the first image, and the electronic device may divide the second image into multiple sub-images based on the equal-angle division. Therefore, the pixel density in the second image may be relatively high, and the uniformity of the sub-images may be relatively high, thereby improving the accuracy of sampling in the second image, further improving the accuracy of the sampled image, avoiding transmitting redundant content, and saving network resources.

On the basis of the embodiment shown in FIG. 2, the method for determining the first image in the above method for image processing will be described below with reference to FIG. 9.

FIG. 9 is a schematic diagram of a method for determining a first image according to an embodiment of the present disclosure. Referring to FIG. 9, the method process includes the followings.

At block S901, a panoramic image corresponding to a first image and a viewpoint of a user are acquired.

Optionally, the electronic device may acquire the panoramic image corresponding to the first image based on any feasible implementation, which is not limited in the embodiments of the present disclosure.

Optionally, the viewpoint of the user may be a center point of a region that the user focuses on in the panoramic image. For example, the viewpoint of the user may be a center point of the field of view of the user, if the user focuses on the region 1 in the panoramic image, the viewpoint of the user may be the center point of the region 1, If the user focuses on the region 2 in the panoramic image, the viewpoint of the user may be the center point of the region 2. It should be noted that the viewpoint of the user may also be any point of the region that the user focuses on in the panoramic image, which is not limited in the embodiments of the present disclosure.

Optionally, the viewpoint of the user may be represented based on a direction parameter. For example, the direction parameter corresponding to the viewpoint of the user may be $(\alpha, \beta, \gamma)$, where $\alpha$ may be a horizontal field of view of the viewpoint of the user (i.e., a horizontal field of view in the FOV), $\beta$ may be a vertical field of view of the viewpoint of the user (i.e., a vertical field of view in the FOV), and $\gamma$ may be a diagonal field of view of the viewpoint of the user (i.e., a diagonal field of view in the FOV).

It should be noted that the electronic device may determine the direction parameter corresponding to the viewpoint based on any feasible implementation, which is not limited in the embodiments of the present disclosure.

Optionally, the electronic device may receive the viewpoint of the user sent by another device. For example, the electronic device may receive the viewpoint of the user (represented based on the direction parameter) sent by the virtual reality device. Optionally, the electronic device may predict the viewpoint of the user. For example, the electronic device may receive the viewpoint of the user sent by the virtual reality device, and predict the viewpoint of the user in a future period of time based on the viewpoint.

Optionally, the electronic device may also acquire the viewpoint of the user based on any other feasible implementations, which is not limited in the embodiments of the present disclosure.

At block S902, the panoramic image is rotated based on the viewpoint of the user, to obtain a rotated image.

In some embodiments, the rotated image may be an image obtained by the electronic device rotating the panoramic image based on the viewpoint of the user. For example, the electronic device may determine a rotation matrix based on the viewpoint of the user, and rotate the panoramic image based on the rotation matrix, to obtain the rotated image. For example, the electronic device may process each pixel in the panoramic image based on the rotation matrix, and then the rotated image may be obtained.

Optionally, the viewpoint of the user may be in the center of the rotated image. For example, after rotating the panoramic image based on the rotation matrix corresponding to the viewpoint of the user, the electronic device may obtain the rotated image, and the viewpoint of the user may be located in the center of the rotated image. For example, for a panoramic image obtained by shooting an object from the front, if the viewpoint of the user is located on the upper side of the panoramic image, the electronic device may rotate the panoramic image to obtain the rotated image, where the rotated image may be a panoramic image obtained by shooting the object from the upper side, and the center of the panoramic image may be the viewpoint of the user.

It should be noted that the viewpoint of the user may also be a point in the central region of the rotated image, or may be any point in the rotated image, which is not limited in the embodiments of the present disclosure.

Optionally, the electronic device may determine the rotation matrix based on the viewpoint of the user, and rotate the panoramic image based on the rotation matrix, to obtain the rotated image. Optionally, the electronic device may determine the rotation matrix based on the following formula:

$$R_v = \begin{bmatrix} cos\alpha \cdot cos\beta & cos\alpha \cdot sin\beta \cdot sin\gamma - sin\alpha \cdot cos\gamma & cos\alpha \cdot sin\beta \cdot cos\gamma + sin\alpha \cdot sin\gamma \\ sin\alpha \cdot sin\beta & sin\alpha \cdot sin\beta \cdot sin\gamma - cos\alpha cos\gamma & sin\alpha \cdot sin\beta \cdot cos\gamma - cos\alpha sin\gamma \\ -sin\beta & cos\beta \cdot sin\gamma & cos\beta \cdot cos\gamma \end{bmatrix}$$

where $R_v$ is the rotation matrix; $\alpha$ may be the horizontal field of view of the viewpoint of the user (i.e., the horizontal field of view in the FOV), $\beta$ may be the vertical field of view of the viewpoint of the user (i.e., the vertical field of view in the FOV), and $\gamma$ may be the diagonal field of view of the viewpoint of the user (i.e., the diagonal field of view in the FOV).

Optionally, the electronic device may process each pixel in the panoramic video based on the rotation matrix, and then the rotated image may be obtained. Since the rotated image is obtained based on the rotation matrix determined by the viewpoint of the user, the viewpoint of the user may be located in the center of the rotated image.

Optionally, after rotating the panoramic image based on the viewpoint of the user to obtain the rotated image, the electronic device may also determine the second image in the rotated image. The electronic device may determine the second image in the rotated image by: determining an image covered by the field of view of the user in the rotated image with the viewpoint of the user as the center, and adding an image within a preset range to each edge of the image covered by the field of view of the user, to obtain the second image.

Optionally, since the viewpoint of the user is located in the center of the rotated image, the electronic device may determine the image covered by the field of view of the user in the rotated image with the viewpoint as the center. The field of view of the user may be any perspective range, which is not limited in the embodiments of the present disclosure. For example, if the field of view of the user is 90 degrees * 100 degrees, the electronic device may determine, with the viewpoint as the center, a region of 90 degrees * 100 degrees in the rotated image, thereby obtaining the image covered by the field of view of the user.

Optionally, in order to avoid that the user may not view a new image when slightly turning his/her head, the electronic device may determine the second image based on the image covered by the field of view of the user. For example, the electronic device may add the image within the preset range to each edge of the image covered by the field of view of the user, thereby obtaining the second image. For example, the electronic device may add an image within a range of 20 degrees to the upper edge of the image covered by the field of view, add an image within a range of 20 degrees to the lower edge of the image covered by the field of view, add an image within a range of 20 degrees to the left edge of the image covered by the field of view, and add an image within a range of 20 degrees to the right edge of the target region, thereby obtaining the second image. In this way, when the user slightly turns his/her head, although leaving the current image covered by the field of view, the user may also see a related image, thereby improving the user experience.

It should be noted that the sizes of the images added by the electronic device to each edge of the image covered by the field of view may be the same or different, which is not limited in the embodiments of the present disclosure.

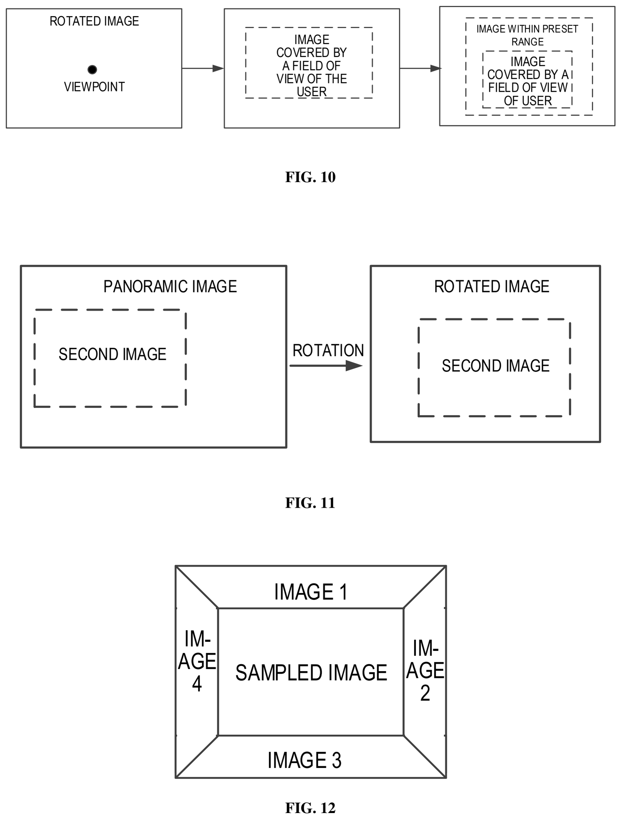

The process of determining the second image will be described below with reference to FIG. 10.

FIG. 10 is a schematic diagram of a process of determining a second image according to an embodiment of the present disclosure. Referring to FIG. 10, a rotated image is included. The viewpoint is located in the center of the rotated image. Based on the field of view of the user, the image covered by the field of view of the user may be determined in the rotated image with the viewpoint as the center, where the image covered by the field of view of the user is located in the central region of the rotated image. The images within the preset range are added to the upper edge, the lower edge, the left edge and the right edge of the image covered by the field of view of the user, thereby obtaining the second image. In this way, the second image may include the image covered by the field of view of the user, and the user may see the corresponding picture even when slightly turning his/her head, thereby improving the user experience and saving network resources.

The rotated image will be described below with reference to FIG. 11.

FIG. 11 is a schematic diagram of a rotated image according to an embodiment of the present disclosure. Referring to FIG. 11, a panoramic image is included. The electronic device (not shown in FIG. 11) may determine that the second image is located on the left side of the panoramic image. The electronic device may determine the rotation matrix based on the direction parameter of the viewpoint in the second image, and process each pixel in the panoramic image based on the rotation matrix to obtain the rotated image. The second image may be located in the center of the rotated image, and the center point of the second image may be located in the center of the rotated image. In this way, after rotating the panoramic image, the rotated image may be projected onto the surface of the three-dimensional sphere, and the center point of the second image may be located on the equator of the three-dimensional sphere. That is, the viewpoint of the user is located on the equator of the three-dimensional sphere, thereby improving the pixel density of the second image.

Optionally, after determining the second image, since the maximum range of the second image may be 180 degrees * 180 degrees, the electronic device may project other images other than the second image onto the plane based on equal-angle projection, and splice the other images with the sampled image corresponding to the second image. In this way, when the user's viewing angle turns out of the second image, the user may also see the corresponding picture, thereby improving the user experience.

Optionally, when performing equal-angle projection on other images other than the second image of the first image, the number of sampling points may be reduced, thereby reducing the image resolution of the other images after being projected onto the plane, and saving network transmission resources.

Optionally, the electronic device may determine a first arc based on an upper left vertex and a lower right vertex of the second image, and determine a second arc based on a lower left vertex and an upper right vertex of the second image, and then divide the images other than the second image in the first image into 4 images to be projected based on the first arc and the second arc, and project the 4 images to be projected onto the plane based on the equal-angle projection, to obtain 4 plane images. The electronic device may splice the 4 plane images on the sampled image corresponding to the second image. The server may send the sampled image spliced with the 4 plane images to the virtual reality device.

For example, the electronic device may obtain the 4 images to be projected based on the first arc and the second arc, where the 4 images to be projected may be located on the upper side of the second image, the lower side of the second image, the left side of the second image, and the right side of the second image, respectively. The electronic device may generate an image of a region on the upper side of the second image, an image of a region on the lower side of the second image, an image of a region on the left side of the second image, and an image of a region on the right side of the second image based on the equal-angle projection, and splice the image of the region on the upper side of the second image on the upper side of the sampled image corresponding to the second image, splice the image of the region on the lower side of the second image on the lower side of the sampled image corresponding to the second image, splice the image of the region on the left side of the second image on the left side of the sampled image corresponding to the second image, and splice the image of the region on the right side of the second image on the right side of the sampled image corresponding to the second image, to obtain the image to be transmitted.

The process of determining the image to be transmitted will be described below with reference to FIG. 12.

FIG. 12 is a schematic diagram of determining an image to be transmitted according to an embodiment of the present disclosure. Referring to FIG. 12, an image to be transmitted is included. The image to be transmitted may include a target image, an image 1, an image 2, an image 3 and an image 4. The image 1 is an image on an upper side of the second image in the first image, and is an image projected onto the plane based on equal-angle projection. The image 2 is an image on the right side of the second image in the first image, and is an image projected onto the plane based on equal-angle projection. The image 3 is an image on the lower side of the second image domain in the first image, and is an image projected onto the plane based on equal-angle projection. The image 4 is an image on the left side of the second image in the first image, and is an image projected onto the plane based on equal-angle projection.

At block S903, the rotated image is projected onto the spherical surface based on perspective projection, to obtain the first image.

Optionally, the electronic device may project the rotated image onto the spherical surface based on perspective projection, to obtain the first image. For example, the electronic device may project the rotated image onto the surface of the sphere based on perspective projection, and then the first image may be obtained. In this way, after projecting the rotated image onto the spherical surface based on perspective projection, the shape of the image covered by the field of view of the user may be similar to the shape of the second image, thereby ensuring that the user may see a valid picture even when turning his/her head, and improving the user experience. For example, in the embodiment shown in FIG. 10, the rotated image in FIG. 10 is projected onto the spherical surface based on perspective projection, and the shape of the image covered by the field of view of the user may be similar to the shape of the image within the preset range, thereby improving the user experience.

An embodiment of the present disclosure provides a method for determining a first image, which includes: acquiring the panoramic image corresponding to the first image and the viewpoint of the user, rotating the panoramic image based on the viewpoint of the user, to obtain the rotated image, and projecting the rotated image onto the spherical surface based on perspective projection, to obtain the first image. In this way, the center of the second image in the first image may be located on the equator of the first image, and the pixel density of the second image may be relatively high, thereby improving the accuracy of determining the sampled image and saving network resources.

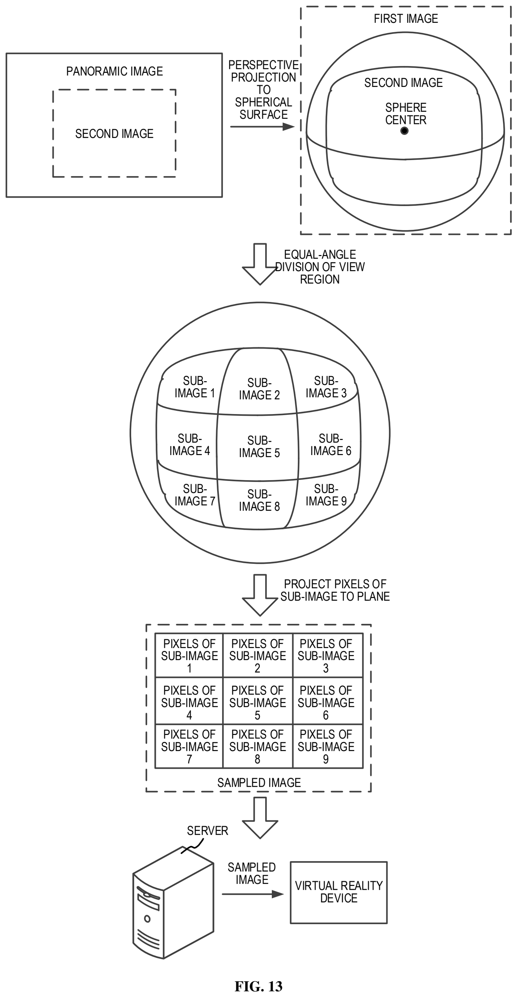

On the basis of any of the above embodiments, the process of the above method for image processing will be described below with reference to FIG. 13.

FIG. 13 is a schematic diagram of a process of a method for image processing according to an embodiment of the present disclosure. Referring to FIG. 13, a panoramic image, a server, and a virtual reality device are included. The panoramic image includes the second image, and the center of the second image is located in the center of the panoramic image. The server may project the panoramic image onto the surface of the sphere based on perspective projection, to obtain the first image. The first image may include the second image, and the center of the second image is located on the equator of the first image.

Referring to FIG. 13, the server may divide the second image in the first image into 9 sub-images based on equal-angle division (for the division process of the second image, reference may be made to the above embodiments, and details will not be repeated in the embodiments of the present disclosure), and project pixels of the 9 sub-images to 9 positions in the sampled image to be generated, to obtain the sampled image. The sampled image may include 9 pixels (exemplarily shown), the first pixel may be determined based on the pixels in the sub-image 1 of the second image, the second pixel may be determined based on the pixels in the sub-image 2 of the second image,..., and the ninth pixel may be determined based on the pixels in the sub-image 9 of the second image.

Referring to FIG. 13, after determining the sampled image, the server may send the sampled image to the virtual reality device, and the virtual reality device may play the sampled image to present a three-dimensional effect for the user, thereby improving the user experience. In this way, the center of the second image in the first image may be located on the equator in the first image, the pixel density of the second image may be relatively high, and the multiple sub-images may be images obtained by performing equal-angle division on the second image. Therefore, the electronic device may uniformly sample the pixels in the second image to obtain the sampled image, thereby improving the accuracy of the sampled image and saving network resources.

The present disclosure provides a method, an apparatus, and an electronic device for image processing. The electronic device may determine the first image, where the first image is the image obtained by projecting the panoramic image onto the spherical surface, the first image may include the second image, and the second image includes the image covered by the field of view of the user in the first image; determine the first angle of the horizontal span of the second image relative to the sphere center corresponding to the first image and the second angle of the vertical span of the second image relative to the sphere center; perform equal-angle division on the second image based on the first angle and the second angle, to obtain M*N sub-images, where the M and the N are positive integers determined based on the preset resolution; and perform pixel sampling on the M*N sub-images, to obtain the sampled image. In the above method, since the multiple sub-images are images obtained by performing equal-angle division on the second image, the uniformity of sampling the second image by the electronic device may be good, and the accuracy of the obtained sampled image may be relatively high, thereby saving network resources.

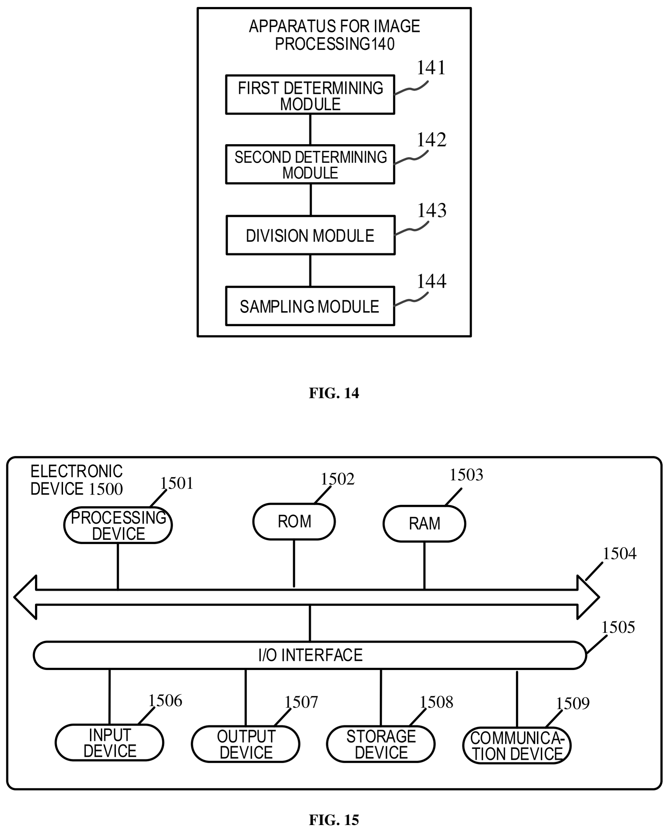

FIG. 14 is a schematic diagram of a structure of an apparatus for image processing according to an embodiment of the present disclosure. Referring to FIG. 14, the apparatus for image processing 140 includes a first determination module 141, a second determination module 142, a division module 143 and a sampling module 144. The first determination module 141 is configured to determine a first image, where the first image is an image obtained by projecting a panoramic image onto a spherical surface, the first image includes a second image, and the second image includes an image covered by a field of view of a user in the first image. The second determination module 142 is configured to determine a first angle of a horizontal span of the second image relative to a sphere center corresponding to the first image and a second angle of a vertical span of the second image relative to the sphere center. The division module 143 is configured to perform equal-angle division on the second image domain based on the first angle and the second angle, to obtain M*N sub-images, where the M and the N are positive integers determined based on a preset resolution. The sampling module 144 is configured to perform pixel sampling on the M*N sub-images, to obtain a sampled image.

According to one or more embodiments of the present disclosure, the division module 143 is further configured to: divide the first angle evenly into M first bisected angles, and divide the second angle evenly into N second bisected angles; and perform equal-angle division on the second image based on the M first bisected angles and the N second bisected angles, to obtain the M*N sub-images.

According to one or more embodiments of the present disclosure, the division module 143 is further configured to: determine M+1 arcs in the vertical direction in the second image associated with the M first bisected angles; determine N+1 arcs in the horizontal direction in the second image associated with the N second bisected angles; and divide the second image into the M*N sub-images based on the M+1 arcs in the vertical direction and the N+1 arcs in the horizontal direction.

According to one or more embodiments of the present disclosure, the sampling module 144 is further configured to: for any target position in the sampled image; determine a sub-image in the second image corresponding to the target position; acquire one or more pixels in the sub-image, and perform fusion processing on the one or more pixels, to obtain a pixel of the target position in the sampled image.

According to one or more embodiments of the present disclosure, the second determination module 142 is further configured to: determine an angle between connection lines connecting a midpoint of two arcs in a vertical direction of the second image and the sphere center as the first angle of the horizontal span; and determine an angle between connection lines connecting a midpoint of two arcs in a horizontal direction of the second image and the sphere center as the second angle of the vertical span.

According to one or more embodiments of the present disclosure, the first determination module 141 is further configured to: acquire a panoramic image corresponding to the first image and a viewpoint of a user; rotate the panoramic image based on the viewpoint of the user, to obtain a rotated image, where the viewpoint of the user is in the center of the rotated image; and project the rotated image onto the spherical surface based on perspective projection, to obtain the first image.

According to one or more embodiments of the present disclosure, the first determination module 141 is further configured to: determine an image covered by a field of view of the user in the rotated image with the viewpoint of the user as the center; and add an image within a preset range to each edge of the image covered by the field of view of the user, to obtain the second image.

The apparatus for image processing provided by the embodiments of the present disclosure may be used to implement the technical solutions of the above method embodiments, and the implementation principles and technical effects thereof are similar, which will not be repeated here in this embodiment.

FIG. 15 is a schematic diagram of a structure of an electronic device according to an embodiment of the present disclosure. Referring to FIG. 15, it illustrates a schematic diagram of a structure of an electronic device 1500 suitable for implementing the embodiments of the present disclosure. The electronic device may include, but is not limited to, mobile terminals such as a mobile phone, a notebook computer, a digital broadcast receiver, a personal digital assistant (abbreviated as PDA), a tablet computer, a portable media player (abbreviated as PMP), a vehicle-mounted terminal (such as a vehicle navigation terminal), etc., and stationary terminals such as a digital TV, a desktop computer, etc. The electronic device shown in FIG. 15 is only an example, and should not impose any restrictions on the function and scope of use of the embodiments of the present disclosure.

As shown in FIG. 15, the electronic device 1500 may include a processing apparatus (such as a central processing unit, a graphics processor, etc.) 1501, which may perform various appropriate actions and processes according to a program stored in a read-only memory (abbreviated as ROM) 1502 or a program loaded from a storage apparatus 1508 into a random access memory (abbreviated as RAM) 1503. The RAM 1503 also stores various programs and data required for the operation of the electronic device 1500. The processing apparatus 1501, the ROM 1502, and the RAM 1503 are connected to each other through a bus 1504. An input/output (I/O) interface 1505 is also connected to the bus 1504.

Generally, the following apparatuses may be connected to the I/O interface 1505: an input apparatus 1506 including, for example, a touch screen, a touchpad, a keyboard, a mouse, a camera, a microphone, an accelerometer, a gyroscope, etc.; an output apparatus 1507 including, for example, a liquid crystal display (abbreviated as LCD), a speaker, a vibrator, etc.; a storage apparatus 1508 including, for example, a magnetic tape, a hard disk, etc.; and a communication apparatus 1509. The communication apparatus 1509 may allow the electronic device 1500 to perform wireless or wired communication with other devices to exchange data. Although FIG. 15 shows the electronic device 1500 with various apparatuses, it should be understood that not all of the illustrated apparatuses are required to be implemented or provided. Alternatively, more or fewer apparatuses may be implemented or provided.

In particular, according to the embodiments of the present disclosure, the process described above with reference to the flowcharts may be implemented as a computer software program. For example, an embodiment of the present disclosure includes a computer program product, which includes a computer program carried on a computer readable medium, and the computer program includes program codes for executing the methods illustrated in the flowcharts. In such embodiment, the computer program may be downloaded and installed from the network via the communication apparatus 1509, or installed from the storage apparatus 1508, or installed from the ROM 1502. When the computer program is executed by the processing apparatus 1501, the above-mentioned functions defined in the methods of the embodiments of the present disclosure are executed.

It should be noted that the above computer readable medium in the present disclosure may be a computer readable signal medium or a computer readable storage medium, or any combination thereof. The computer readable storage medium may be, for example, but not limited to, an electrical, magnetic, optical, electromagnetic, infrared, or semiconductor system, apparatus or device, or any combination thereof. More specific examples of the computer readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer readable storage medium may be any tangible medium that contains or stores a program, and the program may be used by or in combination with an instruction execution system, apparatus, or device. In the present disclosure, the computer readable signal medium may include a data signal propagated in a baseband or as a part of a carrier wave, in which computer readable program codes are carried. The data signal propagated in this way may take many forms, including but not limited to an electromagnetic signal, an optical signal, or any suitable combination thereof. The computer readable signal medium may also be any computer readable medium other than the computer readable storage medium. The computer readable signal medium may send, propagate, or transmit a program used by or in combination with an instruction execution system, apparatus, or device. The program codes contained in the computer readable medium may be transmitted by any suitable medium, including but not limited to: a wire, an optical cable, a radio frequency (RF), etc., or any suitable combination thereof.

The above computer readable medium may be included in the above electronic device, or may exist alone without being assembled into the electronic device.

The above computer readable medium carries one or more programs, and when the one or more programs are executed by the electronic device, the electronic device is caused to execute the method shown in the above embodiments.

An embodiment of the present disclosure provides a computer-readable storage medium storing computer-executable instructions, and when a processor executes the computer-executable instructions, the method for image processing involved in the above embodiments is implemented.

An embodiment of the present disclosure provides a computer program product, including a computer program, and when the computer program is executed by a processor, the method for image processing involved in the above embodiments is implemented.

The computer program codes for carrying out the operations of the present disclosure may be written in one or more programming languages or a combination thereof. The above-mentioned programming languages include object-oriented programming languages such as Java, Smalltalk, C++, and also include conventional procedural programming languages such as "C" language or similar programming languages. The program codes may be executed entirely on a user computer, partly on a user computer, as a stand-alone software package, partly on a user computer and partly on a remote computer, or entirely on a remote computer or a server. In the case of the remote computer, the remote computer may be connected to the user computer through any type of network, including a local area network (abbreviated as LAN) or a wide area network (abbreviated as WAN), or the connection may be made to an external computer (for example, through the Internet using an Internet service provider).

The flowcharts and block diagrams in the drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, and the module, the program segment, or the portion of codes contains one or more executable instructions for implementing specified logical functions. It should also be noted that, in some alternative implementations, the functions noted in the blocks may also occur out of the order noted in the drawings. For example, two blocks shown in succession may, in fact, may be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments described in the present disclosure may be implemented in software or hardware. The name of the unit does not constitute a limitation on the unit itself under certain circumstances, for example, the first acquisition unit may also be described as "a unit for acquiring at least two Internet protocol addresses".

The functions described herein above may be performed, at least partially, by one or more hardware logic components. For example, without limitation, available example types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the foregoing. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

It should be noted that the modifications of "one" and "a plurality of" mentioned in the present disclosure are illustrative and not restrictive, and those skilled in the art should understand that unless the context clearly indicates otherwise, it should be understood as "one or more".

The names of messages or information exchanged between a plurality of apparatus in the implementations of the present disclosure are only for illustrative purposes, and are not intended to limit the scope of these messages or information.

It may be understood that before using the technical solutions disclosed in the embodiments of the present disclosure, users should be informed of the type, scope of use, and usage scenarios of personal information involved in the present disclosure in an appropriate manner in accordance with relevant laws and regulations, and the authorization of users should be obtained.

For example, in response to receiving an active request from a user, prompt information is sent to the user to explicitly remind the user that the operation requested to be performed will require the acquisition and use of the user's personal information. Therefore, the user may independently choose whether to provide personal information to the software or hardware, such as electronic device, application, server or storage medium, that performs the operation of the technical solution of the present disclosure according to the prompt information. As an optional but non-limiting implementation, in response to receiving an active request from a user, the manner of sending prompt information to the user may be, for example, a pop-up window, and the prompt information may be presented in the form of text in the pop-up window. In addition, the pop-up window may also carry a selection control for the user to select "agree" or "disagree" to provide personal information to the electronic device.

It may be understood that the above process of notifying and obtaining the user authorization is only illustrative, and does not constitute a limitation on the implementations of the present disclosure, and other manners that satisfy relevant laws and regulations may also be applied to the implementations of the present disclosure.

It may be understood that the data involved in the technical solutions (including but not limited to the data itself, the acquisition or use of the data) should comply with requirements of corresponding laws, regulations and related provisions. The data may include information, parameters, messages, etc., such as the stream switching indication information.

The above description is only preferred embodiments of the present disclosure and an illustration of applied technical principles. Those skilled in the art should understand that the scope of disclosure involved in the present disclosure is not limited to the technical solutions formed by the specific combination of the above technical features, and should also cover other technical solutions formed by any combination of the above technical features or equivalent features thereof without departing from the above disclosed concept. For example, the technical solutions formed by replacing the above features with the technical features with similar functions disclosed in the present disclosure (but not limited to).

In addition, although operations are described in a particular order, this should not be understood as requiring that these operations are performed in the particular order shown or in a sequential order. Under certain circumstances, multitasking and parallel processing may be advantageous. Similarly, although the above discussion contains several specific implementation details, these should not be interpreted as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in language specific to structural features and/or logical actions of the methods, it should be understood that the subject matter defined in the appended claims is not necessarily limited to the specific features or actions described above. Rather, the specific features and actions described above are merely example forms of implementing the claims.

**Claims**

1. A method for image processing, comprising:

    determining a first image, the first image being an image obtained by projecting a panoramic image onto a spherical surface, the first image comprising a second image, and the second image comprising an image covered by a field of view of a user in the first image;
    determining a first angle of a horizontal span of the second image relative to a sphere center corresponding to the first image and a second angle of a vertical span of the second image relative to the sphere center;
    performing equal-angle division on a second image domain based on the first angle and the second angle, to obtain M*N sub-images, M and N being positive integers determined based on a preset resolution; and
    performing pixel sampling on the M*N sub-images, to obtain a sampled image.

2. The method of claim 1, wherein performing equal-angle division on the second image based on the first angle and the second angle, to obtain the M*N sub-images comprises:

    dividing the first angle evenly into M first bisected angles, and dividing the second angle evenly into N second bisected angles; and
    performing equal-angle division on the second image based on the M first bisected angles and the N second bisected angles, to obtain the M*N sub-images.

3. The method of claim 2, wherein performing equal-angle division on the second image based on the M first bisected angles and the N second bisected angles, to obtain the M*N sub-images comprises:

    determining M+1 arcs in a vertical direction in the second image associated with the M first bisected angles;
    determining N+1 arcs in a horizontal direction in the second image associated with the N second bisected angles; and
    dividing the second image into the M*N sub-images based on the M+1 arcs in the vertical direction and the N+1 arcs in the horizontal direction.

4. The method of any of claims 1 to 3, wherein performing pixel sampling on the M*N sub-images of the second image to obtain the sampled image comprises:

    for any target position in the sampled image,
    determining a sub-image in the second image corresponding to the target position; and
    acquiring one or more pixels in the sub-image, and performing fusion processing on the one or more pixels, to obtain a pixel of the target position in the sampled image.

5. The method of any of claims 1 to 3, wherein determining the first angle of the horizontal span of the second image relative to the sphere center corresponding to the first image and the second angle of the vertical span of the second image relative to the sphere center comprises:

    determining an angle between connection lines connecting a midpoint of two arcs in a vertical direction of the second image and the sphere center as the first angle of the horizontal span; and
    determining an angle between connection lines connecting a midpoint of two arcs in a horizontal direction of the second image and the sphere center as the second angle of the vertical span.

6. The method of any of claims 1 to 3, wherein determining the first image comprises:

    acquiring a panoramic image corresponding to the first image and a viewpoint of a user;
    rotating the panoramic image based on the viewpoint of the user, to obtain a rotated image, wherein the viewpoint of the user is in the center of the rotated image; and
    projecting the rotated image onto a spherical surface based on perspective projection, to obtain the first image.

7. The method of claim 6, wherein after the rotating the panoramic image based on the viewpoint of the user to obtain the rotated image, the method further comprises:

determining an image covered by a field of view of the user in the rotated image with the viewpoint of the user as the center; and
adding an image within a preset range to each edge of the image covered by the field of view of the user, to obtain the second image.

8. An apparatus for image processing, comprising a first determination module, a second determination module, a division module and a sampling module, wherein:

the first determination module is configured to determine a first image, wherein the first image is an image obtained by projecting a panoramic image onto a spherical surface, the first image comprises a second image, and the second image comprises an image covered by a field of view of a user in the first image;
the second determination module is configured to determine a first angle of a horizontal span of the second image relative to a sphere center corresponding to the first image and a second angle of a vertical span of the second image relative to the sphere center;
the division module is configured to perform equal-angle division on a second image domain based on the first angle and the second angle, to obtain M*N sub-images, wherein the M and the N are positive integers determined based on a preset resolution; and
the sampling module is configured to perform pixel sampling on the M*N sub-images, to obtain a sampled image.

9. An electronic device, comprising:

a processor and a memory;
the memory storing computer-executable instructions; and
the processor executing the computer-executable instructions stored in the memory, to cause the processor to perform the method for image processing according to any of claims 1 to 7.

10. A computer-readable storage medium storing computer-executable instructions that, when executing by a processor, causing the processor to perform the method for image processing according to any of claims 1 to 7.

SPHERICAL IMAGE

PROJECTED TO PLANE

ARCTIC REGION

EQUATOR REGION

ANTARCTIC REGION

DIVIDE INTO IMAGE PATCHES

| IMAGE PATCH 1 | IMAGE PATCH 2 | IMAGE PATCH 3 | IMAGE PATCH 4 | IMAGE PATCH 5 |
|---|---|---|---|---|
| IMAGE PATCH 6 | IMAGE PATCH 7 | IMAGE PATCH 8 | IMAGE PATCH 9 | IMAGE PATCH 10 |
| IMAGE PATCH 11 | IMAGE PATCH 12 | IMAGE PATCH 13 | IMAGE PATCH 15 | IMAGE PATCH 15 |
| IMAGE PATCH 16 | IMAGE PATCH 17 | IMAGE PATCH 18 | IMAGE PATCH 19 | IMAGE PATCH 20 |
| IMAGE PATCH 21 | IMAGE PATCH 22 | IMAGE PATCH 23 | IMAGE PATCH 24 | IMAGE PATCH 25 |

USER VIEWPOINT IN FRONT

SERVER

IMAGE PATCH 13

VIRTUAL REALITY DEVICE

USER VIEWPOINT AT TOP

IMAGE SLICE 1
IMAGE SLICE 2
IMAGE SLICE 3
IMAGE SLICE 4
IMAGE SLICE 5

VIRTUAL REALITY DEVICE

**FIG. 1**

DETERMINE A FIRST IMAGE, THE FIRST IMAGE INCLUDING A SECOND IMAGE — S201

DETERMINE A FIRST ANGLE OF HORIZONTAL SPAN OF THE SECOND IMAGE RELATIVE TO A SPHERE CENTER CORRESPONDING TO THE FIRST IMAGE AND A SECOND ANGLE OF VERTICAL SPAN OF THE SECOND IMAGE RELATIVE TO THE SPHERE CENTER — S202

PERFORM EQUAL-ANGLE DIVISION ON THE SECOND IMAGE BASED ON THE FIRST ANGLE AND THE SECOND ANGLE TO OBTAIN M*N SUB-IMAGES — S203

PERFORM PIXEL SAMPLING ON THE M*N SUB-IMAGES TO OBTAIN A SAMPLED IMAGE — S204

**FIG. 2**

FIRST IMAGE   SECOND IMAGE

**FIG. 3**

FIRST IMAGE

SECOND IMAGE

LEFT ARC

SPHERE CENTER

RIGHT ARC

FIRST ANGLE

**FIG. 4**

FIRST IMAGE

UPPER ARC

SECOND IMAGE

SECOND ANGLE

SPHERE CENTER

LOWER ARC

**FIG. 5**

**FIG. 6**

**FIG. 7**

FIRST IMAGE

SUB-IMAGE 1 SUB-IMAGE 2 SUB-IMAGE 3

SUB-IMAGE 4 SUB-IMAGE 5 SUB-IMAGE 6

SUB-IMAGE 7 SUB-IMAGE 8 SUB-IMAGE 9

SAMPLED IMAGE TO BE GENERATED

PROJECTING

SAMPLED IMAGE

**FIG. 8**

ACQUIRE A PANORAMIC IMAGE CORRESPONDING TO A FIRST IMAGE AND A VIEWPOINT OF A USER — S901

ROTATE THE PANORAMIC IMAGE BASED ON THE VIEWPOINT OF THE USER TO OBTAIN A ROTATED IMAGE — S902

PROJECT THE ROTATED IMAGE ONTO A SPHERICAL SURFACE BASED ON PERSPECTIVE PROJECTION TO OBTAIN THE FIRST IMAGE — S903

**FIG. 9**

| ROTATED IMAGE<br><br>●<br><br>VIEWPOINT | → | IMAGE<br>COVERED BY<br>A FIELD OF<br>VIEW OF THE<br>USER | → | IMAGE WITHIN PRESET RANGE<br>IMAGE<br>COVERED BY A<br>FIELD OF VIEW<br>OF USER |

**FIG. 10**

| PANORAMIC IMAGE<br><br>SECOND IMAGE | ROTATION<br>→ | ROTATED IMAGE<br><br>SECOND IMAGE |

**FIG. 11**

| IMAGE 1 |
| IM-AGE 4 | SAMPLED IMAGE | IM-AGE 2 |
| IMAGE 3 |

**FIG. 12**

PANORAMIC IMAGE

SECOND IMAGE

PERSPECTIVE PROJECTION TO SPHERICAL SURFACE

FIRST IMAGE

SECOND IMAGE

SPHERE CENTER

EQUAL-ANGLE DIVISION OF VIEW REGION

SUB-IMAGE 1 | SUB-IMAGE 2 | SUB-IMAGE 3

SUB-IMAGE 4 | SUB-IMAGE 5 | SUB-IMAGE 6

SUB-IMAGE 7 | SUB-IMAGE 8 | SUB-IMAGE 9

PROJECT PIXELS OF SUB-IMAGE TO PLANE

| PIXELS OF SUB-IMAGE 1 | PIXELS OF SUB-IMAGE 2 | PIXELS OF SUB-IMAGE 3 |
| PIXELS OF SUB-IMAGE 4 | PIXELS OF SUB-IMAGE 5 | PIXELS OF SUB-IMAGE 6 |
| PIXELS OF SUB-IMAGE 7 | PIXELS OF SUB-IMAGE 8 | PIXELS OF SUB-IMAGE 9 |

SAMPLED IMAGE

SERVER

SAMPLED IMAGE

VIRTUAL REALITY DEVICE

**FIG. 13**

APPARATUS FOR IMAGE
PROCESSING140

FIRST DETERMINING
MODULE — 141

SECOND DETERMINING
MODULE — 142

DIVISION MODULE — 143

SAMPLING MODULE — 144

**FIG. 14**

ELECTRONIC
DEVICE 1500

PROCESSING
DEVICE 1501

ROM 1502

RAM 1503

1504

1505

I/O INTERFACE

INPUT
DEVICE 1506

OUTPUT
DEVICE 1507

STORAGE
DEVICE 1508

COMMUNICA-
TION DEVICE 1509

**FIG. 15**

# INTERNATIONAL SEARCH REPORT

| International application No. |
| --- |
| **PCT/CN2024/095519** |

**A. CLASSIFICATION OF SUBJECT MATTER**

G06T 3/00(2024.01)i

According to International Patent Classification (IPC) or to both national classification and IPC

**B. FIELDS SEARCHED**

Minimum documentation searched (classification system followed by classification symbols)

IPC:G06T3/-

Documentation searched other than minimum documentation to the extent that such documents are included in the fields searched

Electronic data base consulted during the international search (name of data base and, where practicable, search terms used)

CNABS, CNTXT, VEN, USTXT, WOTXT, BAIDU, CNKI, IEEE: 鱼眼, 全景图像, 球面, 球心, 视场角, 视角, 视点, 重合, 覆盖, 垂直, 竖直, 纵向, 经度, 水平, 横向, 纬度, 角度, 夹角, 等分, 分割, 分块, 划分, 均分, 平分, 切分, 平均, 分辨率, 像素, 均匀, 弧线, 旋转, panoramic image, sphericity, spherical center, FOV, field of view, vertical, horizontal, angle, devide, arc, rotate

**C. DOCUMENTS CONSIDERED TO BE RELEVANT**

| Category* | Citation of document, with indication, where appropriate, of the relevant passages | Relevant to claim No. |
| --- | --- | --- |
| A | CN 109327699 A (HUAWEI TECHNOLOGIES CO., LTD.) 12 February 2019 (2019-02-12) description, paragraphs 6-55, and figures 1 and 2 | 1-10 |
| A | CN 115529449 A (HUAWEI TECHNOLOGIES CO., LTD.) 27 December 2022 (2022-12-27) description, paragraphs 96-122, and figure 2 | 1-10 |
| A | CN 110956583 A (HUAWEI TECHNOLOGIES CO., LTD.) 03 April 2020 (2020-04-03) description, paragraphs 5-8 | 1-10 |
| A | CN 108243333 A (SHANGHAI WEIPAI ELECTRONIC TECHNOLOGY CO., LTD.) 03 July 2018 (2018-07-03) entire document | 1-10 |
| A | CN 114549289 A (SHENZHEN SENSETIME TECHNOLOGY CO., LTD.) 27 May 2022 (2022-05-27) entire document | 1-10 |
| A | US 2016156844 A1 (CANON K.K.) 02 June 2016 (2016-06-02) entire document | 1-10 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 July 2024** | **31 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/095519**

| C. | DOCUMENTS CONSIDERED TO BE RELEVANT | |
|---|---|---|
| Category* | Citation of document, with indication, where appropriate, of the relevant passages | Relevant to claim No. |
| A | WO 2023040932 A1 (ARASHI VISION INC.) 23 March 2023 (2023-03-23)<br>entire document | 1-10 |

Form PCT/ISA/210 (second sheet) (July 2022)

**INTERNATIONAL SEARCH REPORT**
Information on patent family members

International application No.

**PCT/CN2024/095519**

| Patent document cited in search report | | | Publication date (day/month/year) | Patent family member(s) | | | Publication date (day/month/year) |
|---|---|---|---|---|---|---|---|
| CN | 109327699 | A | 12 February 2019 | AU | 2018311589 | A1 | 20 February 2020 |
| | | | | AU | 2018311589 | B2 | 22 December 2022 |
| | | | | US | 2020154138 | A1 | 14 May 2020 |
| | | | | US | 11032571 | B2 | 08 June 2021 |
| | | | | KR | 20200019718 | A | 24 February 2020 |
| | | | | KR | 102357137 | B1 | 08 February 2022 |
| | | | | JP | 6984841 | B2 | 22 December 2021 |
| | | | | BR | 112020002235 | A2 | 28 July 2020 |
| | | | | PH | 12020500047 | A1 | 28 September 2020 |
| | | | | EP | 3633993 | A1 | 08 April 2020 |
| | | | | EP | 3633993 | A4 | 24 June 2020 |
| | | | | CA | 3069034 | A1 | 07 February 2019 |
| | | | | CA | 3069034 | C | 28 May 2024 |
| | | | | WO | 2019024521 | A1 | 07 February 2019 |
| | | | | SG | 11201913824 | A1 | 30 January 2020 |
| | | | | IN | 202037000063 | A | 13 March 2020 |
| | | | | VN | 69753 | A | 27 April 2020 |
| | | | | PH | 12020500047 | A1 | 28 September 2020 |
| | | | | CN | 109327699 | B | 16 July 2021 |
| | | | | RU | 2020108306 | A | 26 August 2021 |
| | | | | RU | 2764462 | C2 | 17 January 2022 |
| | | | | IN | 487091 | B | 22 December 2023 |
| | | | | JP | 2020529149 | W | 01 October 2020 |
| CN | 115529449 | A | 27 December 2022 | WO | 2022268008 | A1 | 29 December 2022 |
| CN | 110956583 | A | 03 April 2020 | WO | 2020063547 | A1 | 02 April 2020 |
| | | | | EP | 3846464 | A1 | 07 July 2021 |
| | | | | EP | 3846464 | A4 | 10 November 2021 |
| | | | | US | 2021218890 | A1 | 15 July 2021 |
| | | | | CN | 110956583 | B | 10 May 2022 |
| CN | 108243333 | A | 03 July 2018 | | None | | |
| CN | 114549289 | A | 27 May 2022 | | None | | |
| US | 2016156844 | A1 | 02 June 2016 | JP | 2016103806 | A | 02 June 2016 |
| | | | | US | 10404912 | B2 | 03 September 2019 |
| WO | 2023040932 | A1 | 23 March 2023 | CN | 113873259 | A | 31 December 2021 |

Form PCT/ISA/210 (patent family annex) (July 2022)

## REFERENCES CITED IN THE DESCRIPTION

**Patent documents cited in the description**

- CN 202310736743